# EUROPÄISCHE PATENTSCHRIFT

(11) **EP 1 900 477 B1**
(45) Veröffentlichungstag und Bekanntmachung des Hinweises auf die Patenterteilung: **29.09.2010**
(21) Anmeldenummer: 07017065.9
(22) Anmeldetag: 31.08.2007
(51) Int. Cl.: B23Q 41/02, B27M 1/08, B29C 65/00, B65G 37/02

(54) **Profilstabbearbeitungs-Vorrichtung, Profilstabbearbeitungs-Anlage und Verfahren zur Profilstabbearbeitung**
Profile member machining device, profile member machining facility and method for machining profile members
Dispositif de traitement de profils, installation de traitement de profils et procédé de traitement de profils

(30) Priorität: 15.09.2006 DE 102006045844
(43) Veröffentlichungstag der Anmeldung: 19.03.2008
(73) Patentinhaber: elumatec GmbH, 75417 Mühlacker (DE)
(72) Erfinder: Hettler, Andreas, 75417 Mühlacker (DE); Lutz, Eugen, 75417 Mühlacker (DE)
(74) Vertreter: Wilhelm, Martin

(56) Entgegenhaltungen:
- GB-A- 1 298 002
- US-A- 3 543 392
- US-A- 3 909 922
- US-A- 5 109 973

## Beschreibung

Die Erfindung betrifft eine Profilstabbearbeitungs-Vorrichtung, insbesondere für den Fensterbau, mit einer Materialtransportbahn und einer Aufnahmeeinrichtung zum Aufnehmen wenigstens eines Profilstabs von der Materialtransportbahn zur Bearbeitung in der Profilstabbearbeitungs-Vorrichtung. Die Erfindung betrifft auch eine Profilstabbearbeitungs-Anlage sowie ein Verfahren zur Profilstabbearbeitung.

Profilstabbearbeitungs-Vorrichtungen zur Bearbeitung von Längsprofilen endlicher Länge sind beispielsweise aus der DE 295 21 754 U1 bekannt. Darin sind ein Spannsegment zum Fixieren eines zu bearbeitenden Längsprofils während eines Bearbeitungsvorgangs sowie ein Transportsystem beschrieben. Mit dem Transportsystem können die Längsprofile der Bearbeitungsvorrichtung zugeführt, während eines Bearbeitungsvorgangs relativ zu Bearbeitungswerkzeugen bewegt und von der Bearbeitungsvorrichtung abgeführt werden.

In der US-Patentschrift US 3,909,922 ist beschrieben, wie unterschiedlichen Maschinenmodulen mittels eines Haupttransportbandes zu bearbeitende Werkstücke zugeführt bzw. von diesen abgeführt werden. Jedes der Maschinenmodule weist einen Pufferbereich auf, in dem zu bearbeitende bzw. bearbeitete Werkstücke zwischengelagert werden können. Die Maschinenmodule weisen außerdem jeweils unterschiedliche Bearbeitungswerkzeuge auf. Die zu bearbeitenden Werkstücke werden mittels des Haupttransportbandes den Maschinenmodulen zugeführt oder an diesem vorbei zu einem der weiteren Maschinenmodule transportiert. Die Bearbeitung und der Transport erfolgen gesteuert mittels einer Steuerung, die im Wesentlichen aus einem Computer besteht und als übergeordnete Steuervorrichtung verstanden werden muss.

In der US-Patentschrift US 3,543,392 ist eine Fertigungsvorrichtung mit verschiedenen Bearbeitungszentren beschrieben. Diese Bearbeitungszentren sind mittels Transportvorrichtungen miteinander verbunden, die zu bearbeitende Werkstücke dem Bearbeitungszentren zuführen bzw. von diesem abtransportieren. Das Transportsystem ist netzartig angeordnet, so dass ein zu bearbeitendes Werkstück auf unterschiedlichen Transportwegen zu einem der Bearbeitungszentren transportiert werden kann. Mittels einer übergeordneten Steuerung werden die zu bearbeitenden Werkstücke auf einem kürzest möglichen Transportweg einem der Bearbeitungszentren zugeführt, wobei einige der Bearbeitungszentren die gleichen Bearbeitungsschritte durchführen können

In der US-Patentschrift US 5,109,973 ist eine Transportvorrichtung beschrieben, mittels der zu bearbeitende Werkstücke Bearbeitungsvorrichtungen, Montagevorrichtungen bzw. Reinigungsvorrichtungen zugeführt werden können. Von diesen Vorrichtungen können jeweils mehrere vorgesehen sein, so dass zu bearbeitende Werkstücke einer dieser Vorrichtungen zugeführt bzw. an einer dieser Vorrichtungen vorbeitransportiert werden können. Die zu bearbeitenden Werkstücke werden nur dann einer der Vorrichtungen zugeführt, wenn die mittels der Vorrichtung durchführbare Bearbeitung bzw. Montage an dem zu bearbeitenden Werkstück vorgesehen ist. Dies wird mittels einer übergeordneten Steuerungsvorrichtung gesteuert.

Der Erfindung liegt die Aufgabe zugrunde, eine Profilstabbearbeitungs-Vorrichtung zu schaffen, die wahlweise alleine oder eingebunden in eine Anlage betrieben werden kann und mit der eine Koppelung mehrerer Profilstabbearbeitungs-Vorrichtungen zu größeren Anlage möglich ist, ohne einen zusätzlichen, übergeordneten Leitrechner zu benötigen.

Gelöst wird diese Aufgabe durch eine Profilstabbearbeitungs-Vorrichtung mit den Merkmalen des Anspruchs 1, eine Profilstabbearbeitungs-Anlage mit den Merkmalen des Anspruchs 7 sowie durch eine Vorrichtung zur Profilstabbearbeitung mit den Merkmalen des Anspruchs 9. Weitere Ausgestaltungen der Erfindung sind Gegenstand der weiteren Ansprüche und werden im Folgenden näher erläutert. Manche der nachfolgenden, jedoch nicht erschöpfend aufgezählten Merkmale und Eigenschaften treffen sowohl auf die Profilstabbearbeitungs-Vorrichtung, als auch auf die Profilstabbearbeitungs-Anlage sowie auf das Verfahren zur Profistabbearbeitung zu. Sie werden teilweise nur einmal beschrieben, gelten jedoch unabhängig voneinander sowohl für die Profilstabbearbeitungs-Vorrichtung, als auch für die Profilstabbearbeitungs-Anlage sowie für das Verfahren zur Profistabbearbeitung. Weiterhin ist die Reihenfolge der aufgelisteten Merkmale nicht bindend sondern kann vielmehr entsprechend einer optimierten Profilstabbearbeitungs-Vorrichtung, einer optimierten Profilstabbearbeitungs-Anlage sowie für ein optimiertes Verfahren zur Profistabbearbeitung geändert werden.

Erfindungsgemäß ist eine Profilstabbearbeitungs-Vorrichtung, insbesondere für den Fensterbau, mit einer Materialtransportbahn und einer Aufnahmeeinrichtung zum Aufnehmen wenigstens eines Profilstabs von der Materialtransportbahn zur Bearbeitung in der Profilstabbearbeitungs-Vorrichtung vorgesehen, wobei die Profilstabbearbeitungs-Vorrichtung eine Steuereinheit mit Steuermitteln aufweist, um einen unbearbeiteten Profilstab wahlweise zu der Aufnahmeeinrichtung oder an dieser vorbei zu transportieren, wobei mittels der Steuermittel unbearbeitete Profilstäbe in einem einstellbaren Verhältnis entweder mittels der Aufnahmeeinrichtung der jeweiligen Profilbearbeitungsvorrichtung aufgenommen oder an dieser vorbeitransportiert werden, wobei die Profilstabbearbeitungs-Vorrichtung ausgebildet ist, ohne Vorsehen einer übergeordneten Steuereinheit modular mit weiteren, gleichenden und mit einer Steuereinheit mit Steuermitteln versehenen Profilstabbearbeitungs-Vorrichtungen zur Bildung einer Anlage bestehend aus mehreren Profilstabbearbeitungs-Vorrichtungen gekoppelt zu werden.

Die erfindungsgemäße Profilstabbearbeitungs-Vorrichtung eignet sich für die Bearbeitung von Kunststoffprofilen ebenso wie für die Bearbeitung von Metallprofilen, beispielsweise Aluminiumprofilen. Mit einer derartigen Profilstabbearbeitungs-Vorrichtung können vorzugsweise alle Bearbeitungsschritte realisiert werden, die für die Bearbeitung von Rohprofilen vorgesehen werden müssen, um beispielsweise Fenster- oder Türrahmen aus Profilstäben herzustellen. Allerdings beschränkt sich die Anwendung der Erfindung nicht auf den Fensterbau. Vielmehr kann die Erfindung in allen Bereichen zur Anwendung kommen, in denen Rohprofile bearbeitet werden müssen, um sie einer für sie vorgesehenen Funktion zuzuführen. Die Bearbeitungsschritte können beispielsweise spanabhebende Bearbeitungsschritte wie Sägen, Bohren oder Fräsen umfassen. Aber auch das Verschrauben von An- und Einbauteilen und/oder das Verschweißen von einzelnen Profilen zu Rahmenteilen oder Rahmen ist möglich.

Um die Bearbeitungsschritte durchführen zu können, werden die Roh-Profile mittels der Materialtransportbahn der Profilstabbearbeitungs-Vorrichtung zugeführt. Die Materialtransportbahn kann dazu beispielsweise als Rollen- oder Walzenbahn ausgebildet sein und/oder Förderbänder oder dergleichen aufweisen. Mittels der Aufnahmeeinrichtung zum Aufnehmen wenigstens eines Profilstabs von der Materialtransportbahn werden die Profilstäbe dann dem oder den Bearbeitungswerkzeugen der Profilstabbearbeitungs-Vorrichtung zugeführt, mittels dem oder denen die Bearbeitungsschritte dann durchgeführt werden. Die Aufnahmeeinrichtung kann hierzu ebenfalls als Rollen- oder Walzenbahn ausgebildet sein und/oder Förderbänder oder dergleichen aufweisen. Im Rahmen der Erfindung ist es ebenfalls möglich, als Aufnahmeeinrichtung beispielsweise eine Greifervorrichtung vorzusehen, mittels der ein Profilstab von der Materialtransportbahn abgehoben und dann der Profilstabbearbeitungs-Vorrichtung zur Bearbeitung zugeführt wird.

Als Steuermittel wird jede Vorrichtung angesehen, mit der eine Steuerung der Profilstabbearbeitungs-Vorrichtung durchführbar ist, insbesondere der Auswahl, ob ein Profilstab der Aufnahmeeinrichtung zugeführt oder an dieser vorbei transportiert werden soll. Die Steuermittel können rein mechanischer Natur sein, eine Kombination aus Mechanik und Elektronik oder rein elektronisch sein. Die Steuermittel können beispielsweise Schieber, Leitflächen, Rollen, Bänder, Greifer aber auch Mikroprozessoren, Relaisschaltungen oder dergleichen sein. Die Steuermittel können auch verschiedene Sensorelemente aufweisen, mit denen beispielsweise eine Position oder eine Lage der Profilstäbe auf der Materialtransportbahn erkannt werden kann.

Mit der erfindungsgemäßen Profilstabbearbeitungs-Vorrichtung kann auf einfache Art eine modulare Anlage zur Bearbeitung von Profilstäben zusammengestellt werden, in der unterschiedlich schnell und mittels verschiedener, separater Bearbeitungsvorrichtungen durchführbare Bearbeitungsschritte aufeinander folgen. So dauert das Einbringen von Ausnehmungen, beispielsweise für Verschlusszapfen oder dergleichen, das Verschrauben von An- und/oder Einbauteilen oder dergleichen etwa drei mal so lang, wie das Absägen von Profilstäben von einem Ur-Profilstab, wobei der Sägevorgang und die anderen genannten Vorgänge vorzugsweise jeweils in einer separaten Vorrichtung vorgenommen werden.

Wird beispielsweise eine als Sägezentrum ausgebildetes Profilstabbearbeitungs-Vorrichtung mit drei als Folgebearbeitungszentren ausgebildeten Profilstabbearbeitungs-Vorrichtungen kombiniert, kann dieser Zeitbedarfsunterschied ausgeglichen werden. Es ist jedoch zu bemerken, dass die Erfindung sich nicht auf diese zahlenmäßige beziehungsweise funktionelle Kombination beschränkt. Ein gesägter Profilstab wird darin dann von dem Sägezentrum mittels der Materialtransportbahn dem ersten Folgebearbeitungszentrum zugeführt. Dort entscheiden die Steuermittel des Folgebearbeitungszentrums, ob dieser Profilstab mittels der Aufnahmeeinrichtung dem ersten Folgezentrum zugeführt werden soll oder ob er mit der Materialtransportbahn einem zweiten, dem ersten folgenden und gleichenden Folgebearbeitungszentrum zugeführt werden soll. Wird das Profil weiter geführt, treffen die Steuermittel des zweiten Folgebearbeitungszentrums dann eine äquivalente Entscheidung, nämlich ob dieser Profilstab mittels der Aufnahmeeinrichtung dem zweiten Folgebearbeitungszentrum zugeführt werden soll oder ob er mit der Materialtransportbahn einem dritten, dem zweiten folgenden und gleichenden Folgebearbeitungszentrum zugeführt werden soll. Das dritte Folgebearbeitungszentrum bearbeitet dann den Profilstab, sofern eines der vorherigen Folgebearbeitungszentren das Profil noch nicht bearbeitet hat.

Auch ein Ausfall, beispielsweise durch Wartung oder Defekt, einer Profilstabbearbeitungs-Vorrichtung, die Teil dieser Anlage ist, kann, insbesondere ohne weiteres Zutun von spezialisierten Fachleuten, aufgefangen werden, da jede der Profilstabbearbeitungs-Vorrichtungen über eigene Steuermittel verfügt. Dadurch kann dann zwar, das vorstehende Beispiel mit einem Sägezentrum und drei Folgebearbeitungszentren zugrundegelegt, das Zeitverhältnis nicht mehr vollständig aufgefangen werden, jedoch muss nicht die gesamte Produktion stillgelegt werden.

Gemäß der Erfindung werden mittels der Steuermittel der Steuereinheit unbearbeitete Profilstäbe in einem einstellbaren Verhältnis entweder mittels der Aufnahmeeinrichtung der jeweiligen Profilbearbeitungsvorrichtung aufgenommen oder an dieser vorbei transportiert.

Das voreingestellte Verhältnis ist abhängig von der Anzahl der Profilstabbearbeitungs-Vorrichtungen, die nacheinander aufeinander folgen. Stehen, wie vorstehend beschrieben, drei Profilstabbearbeitungs-Vorrichtungen als Folgebearbeitungszentren zur Verfügung, ergeben sich folgende Verhältnisse zwischen der Anzahl der bearbeiteten Profile auf einem Austransporttisch eines Folgebearbeitungszentrums und der Nummer des Profilstabs, der aus einer Reihe von zugeführten Profilstäben von dem Folgebearbeitungszentrum bearbeitet wird. Die Nummer kann dabei maximal der Anzahl der Folgebearbeitungszentren entsprechen, die nach einen Sägezentrum beziehungsweise einem bereits passierten Folgebearbeitungszentrum noch folgen können. Die Austransporttische können jedem Folgebearbeitungszentrum zum Austransport bearbeiteter Profile zugeordnet sein.

Schleust also beispielsweise das erste Folgebearbeitungszentrum zwei Profilstäbe durch, um das dritte selbst zu bearbeiten, und gibt dieses Folgebearbeitungszentrum die bearbeiteten Profile auf einen Austransporttisch aus, so ergibt sich eine Taktung von 1:3. Das zweite Folgebearbeitungszentrum schleust dementsprechend einen Profilstab durch, um den zweiten selbst zu bearbeiten, und gibt die bearbeiteten Profile auf einen Austransporttisch aus. Daraus ergibt sich eine Taktung von 1:2 für die zweite Profilstabbearbeitungs-Vorrichtung. Das dritte und letzte Folgebearbeitungszentrum schleust keinen Profilstab durch sondern bearbeitet jeden Profilstab, der ihm zugeführt wird, und gibt den bearbeiteten Profilstab auf einem Austransporttisch aus. Als Taktung ergibt sich daraus 1:1.

Fällt nun eine der Profilstabbearbeitungs-Vorrichtungen aus, beispielsweise die zweite, so können die Verhältnisse entsprechend angepasst werden. Das erste Folgebearbeitungszentrum arbeitet nun nach der Taktung 1:2 und das dritte weiterhin nach der Taktung 1:1.

Sind für die Profilstabbearbeitungs-Vorrichtungen keine Austransporttische vorgesehen, werden also alle bearbeiteten Profile zusammen mit den unbearbeiteten Profilen mittels der Materialtransportbahn transportiert, ergibt sich für jedes der drei aufeinanderfolgenden Profilstabbearbeitungs-Vorrichtungen ein Verhältnis von 0:3. Zusätzlich zu dem Verhältnis von aufgenommenen und bearbeiteten Profilstäben zu weitertransportierten Profilstäben ist also noch einzustellen, ob bearbeitete Profilstäbe auf den Austransporttisch ausgegeben werden sollen.

Der modulare Aufbau ist vorzugsweise und insbesondere sowohl bezüglich der Mechanik als auch der Software realisiert. Jede Profilbearbeitungsvorrichtung kann so für sich alleine als eigenständige Vorrichtung arbeiten. Werden mehrere Profilstabbearbeitungs-Vorrichtungen nacheinander vorgesehen, wird an der einzelnen Vorrichtung selbst lediglich eingestellt, ob jeder Stab bearbeitet werden soll, ob kein Stab bearbeitet werden soll oder ob jeder erste, zweite, dritte usw. Stab bearbeitet und die übrigen Stäbe weitertransportiert werden sollen.

Daraus ergibt sich auch die Möglichkeit, eine Fertigungsanlage über einen längeren Zeitraum auf einfache Weise zu erweitern. Ist beispielsweise erst vorgesehen, nur ein Sägezentrum mit einem Folgebearbeitungszentrum in Betrieb zu nehmen, kann dann, je nach Bedarf, ein weiteres Folgebearbeitungszentrum hinzugefügt werden. Dazu muss das Folgebearbeitungszentrum lediglich aufgestellt und an ein Stromnetz angeschlossen werden. Eine Vernetzung verschiedener Steuermittel muss nicht vorgenommen werden. Lediglich einfache Einstellungen an den Steuermitteln der einzelnen Profilstabbearbeitungs-Vorrichtungen sind vorzunehmen, wobei diese beispielsweise mit einer einfachen Bediensoftware vorgenommen werden können.

In Weiterbildung der Erfindung ist die Materialtransportbahn an der Aufnahmeeinrichtung vorbei geführt und die Aufnahmeeinrichtung ist für das Abheben eines Profilstabs von der durchgehenden Materialtransportbahn ausgebildet.

Die Aufnahmeeinrichtung kann hierzu beispielsweise aus einem Bereich unterhalb der Materialtransportbahn in einen Bereich über der Materialtransportbahn geführt werden. Mittels der Aufwärtsbewegung werden dann die Profilstäbe von der Materialtransportbahn abgehoben und liegen auf der Aufnahmeeinrichtung auf. Auf diese Weise kann beispielsweise ein Transport der Profilstäbe in eine Richtung erfolgen, die nicht parallel zur Transportrichtung der Materialtransportbahn verläuft, beispielsweise quer dazu, insbesondere senkrecht.

Das Abheben kann beispielsweise auch mittels eines Greifers erfolgen, der ausgehend von einem Bereich oberhalb der Materialtransportbahn einen Profilstab ergreift und diesen von der Materialtransportbahn wegtransportiert.

In Weiterbildung der Erfindung kann die Aufnahmeeinrichtung rechenartig von unten zwischen parallelen Förderbändern der Materialtransportbahn und gegebenenfalls weitere Transportvorrichtungen hindurchtreten.

Alternativ hierzu können separate Transportmittel vorgesehen sein, um einen unbearbeiteten Profilstab an der Profilbearbeitungsvorrichtung vorbei zu transportieren, wobei vorbei transportieren hier jedes passieren der Profilbearbeitungsvorrichtung in einer beliebigen Relativposition zur Profilstabbearbeitungs-Vorrichtung bedeuten kann. Diese separaten Transportmittel können beliebig ausgebildet sein, ohne den Rahmen der Erfindung zu verlassen. Vorzugsweise ist jedoch die Aufnahmeeinrichtung jeder Profilstabbearbeitungseinrichtung für den Weitertransport eines unbearbeiteten Profilstabs zur nächsten Profilstabbearbeitungs-Vorrichtung ausgebildet.

In Weiterbildung der Erfindung sind die Steuermittel der Steuereinheit der Materialtransportbahn zugeordnet und die Steuermittel der Steuereinheit und die Materialtransportbahn und gegebenenfalls weitere Transportvorrichtungen sind unabhängig von den übrigen Komponenten der Profilbearbeitungsvorrichtung betreibbar.

Auf diese Weise wird gewährleistet, dass bei Ausfall einer Bearbeitungseinheit der Durchtransport weiter möglich ist. So kann beispielsweise auch vorgesehen werden, dass die Materialtransportbahn von der Profilstabbearbeitungs-Vorrichtung, der die Materialtransportbahn zugeordnet ist, abgetrennt werden kann, um beispielsweise die Profilstabbearbeitungs-Vorrichtung austauschen zu können.

In Weiterbildung der Erfindung weisen die Steuermittel der Steuereinheit und die Materialtransportbahn der Profilbearbeitungsvorrichtung eine eigene Stromversorgung und eine eigene programmierbare Steuerung auf, insbesondere eine speicherprogrammierbare Steuerung (SPS).

Auch diese Weiterbildung ist vorteilhaft, wenn eine von mehreren Profilstabbearbeitungs-Vorrichtungen, insbesondere auch deren Steuermittel, beispielsweise wegen eines Defekts ausgefallen ist. So können die übrigen, nicht defekten Profilstabbearbeitungs-Vorrichtungen weiter betrieben werden, da die Materialtransportbahn der defekten Profilstabbearbeitungs-Vorrichtung weiter Profilstäbe transportieren kann. Besondere Einstellungen oder Umbauarbeiten müssen hierfür nicht vorgenommen werden.

In Weiterbildung der Erfindung weist die Profilbearbeitungsvorrichtung eine programmierbare Steuereinheit auf, insbesondere eine speicherprogrammierbare Steuerung (SPS).

Dadurch ist insbesondere ermöglicht, mehrere Profilstabbearbeitungs-Vorrichtungen modular zu koppeln, ohne dass eine übergeordnete Steuereinheit vorgesehen werden muss, beispielsweise ein Steuerrechner. Auch kann so jede Profilstabbearbeitungs-Vorrichtung für sich alleine im "stand-alone-Betrieb" arbeiten.

Die der Erfindung zugrunde liegende Aufgabe wird auch durch eine Profilstabbearbeitungs-Anlage gelöst, insbesondere für den Fensterbau, die wenigstens zwei sich gleichende und miteinander gekoppelte Profilbearbeitungsvorrichtungen zum Durchführen im wesentlichen gleicher Bearbeitungsvorgänge aufweist, wobei die Profilbearbeitungsvorrichtungen jeweils eine Materialtransportbahn aufweisen, wobei die Materialtransportbahnen der Profilbearbeitungsvorrichtungen hintereinander angeordnet sind, wobei jede Profilstabbearbeitungs-Vorrichtung eine Aufnahmeeinrichtung zum Aufnehmen wenigstens eines Profilstabs von der Materialtransportbahn zur Bearbeitung in der Profilbearbeitungsvorrichtung auf-weist, und wobei jede Profilstabbearbeitungs-Vorrichtung Steuermittel aufweist, um einen unbearbeiteten Profilstab wahlweise mittels der Aufnahmeeinrichtung aufzunehmen oder an dieser vorbei zu transportieren.

In Weiterbildung der Erfindung sind die Materialtransportbahnen hintereinander angeordneter Profilbearbeitungsvorrichtungen mittels eines Übergabewagens gekoppelt, wobei jede Materialtransportbahn wenigstens zwei parallel laufende Förderbänder aufweist und der Übergabewagen wenigstens zwei Hubzinken zur Aufnahme eines Profilstabs auf-weist, die zwischen den Förderbändern hindurch anhebbar sind.

Mittels des Übergabewagens werden Profilstäbe von einer Materialtransportbahn auf die darauffolgende weitergegeben. Auf diese Weise können die Materialtransportbahnen der einzelnen Profilstabbearbeitungs-Vorrichtungen identisch ausgebildet sein und die Materialtransportbahnen der einzelnen, miteinander zu verbindenden Profilstabbearbeitungs-Vorrichtungen können auf Stoß aufeinander zu laufen.

Durch das Anheben des Profilsstabs durch die zwei Hubzinken wird vorteilhaft erreicht, dass die Profilstäbe nicht verkratzen können, wie dies beim Weiterschieben über eine Oberfläche der Fall wäre. Dies ist insbesondere bei der Bearbeitung von Profilstäben aus Metallen vorteilhaft, beispielsweise von eloxierten Aluminiumprofilen.

Schließlich wird die der Erfindung zugrundeliegende Aufgabe auch durch ein Verfahren zur Profilstabbearbeitung mittels wenigstens zwei sich gleichenden, eine erfindungsgemäße Profilstabbearbeitungsanlage bildenden Profilstabbearbeitungs-Vorrichtungen zum Durchführen im wesentlichen gleicher Bearbeitungsvorgänge gelöst, wobei die Profilbearbeitungsvorrichtungen jeweils eine Steuereinheit mit Steuermitteln sowie eine Materialtransportbahn aufweisen, wobei die Materialtransportbahnen der Profilstabbearbeitungsvorrichtungen hintereinander angeordnet sind, und wobei die Steuermittel der jeweiligen Profilstabbearbeitungs-Vorrichtung entscheiden, ob ein unbearbeiteter Profilstab wahlweise in der Profilstabbearbeitungsvorrichtung bearbeitet wird oder ob ein unbearbeiter Profilstab an der Profilstabbearbeitungs-Vorrichtung vorbei weitertransportiert wird.

In einer Weiterbildung des erfindungsgemäßen Verfahrens wird eine erste vordefinierte Anzahl an unbearbeiteten Profilstäben mittels der Aufnahmeeinrichtung der ersten Profilstabbearbeitungs-Vorrichtung aufgenommen und eine zweite vordefinierte Anzahl an unbearbeiteten Profilstäben an der Profilstabbearbeitungs-Vorrichtung vorbei transportiert.

Es ist im Rahmen der Erfindung von untergeordneter Bedeutung, ob erst ein Profilstab mittels der Aufnahmeeinrichtung aufgenommen wird und dann die weiterzutransportierenden Profilstäbe weitertransportiert werden, oder ob erst weiterzutransportierenden Profilstäbe weitertransportiert werden und dann ein Profilstab mittels der Aufnahmeeinrichtung aufgenommen wird.

In Weiterbildung der Erfindung ist ein Verhältnis der ersten vordefinierten Anzahl und der zweiten vordefinierten Anzahl an jeder Profilbearbeitungsvorrichtung einstellbar.

In Weiterbildung der Erfindung werden in einer jeweiligen Profitbearbeitungsvorrichtung bearbeitete Profilstäbe zur eventuellen Weiterverarbeitung abtransportiert.

Es werden also keine von den Profilstabbearbeitungs-Vorrichtungen bereits bearbeiteten Profilstäbe zurück auf die Materialtransportbahn transportiert. Auf den Materialtransportbahnen liegen somit immer nur unbearbeitete Profilstäbe, wobei unbearbeitet heißt, dass die Profilstäbe von der zugeordneten Bearbeitungsvorrichtung noch nicht bearbeitetet wurden. Es ist jedoch durchaus möglich, wie vorstehend bereits angedeutet, dass die Profilstäbe nicht vollständig unbearbeitet sind. Die Profilstäbe können beispielsweise schon auf eine bestimmte Länge gesägt worden sein oder sie können bereits schon mit Beschläge versehen sein. Es ist auch möglich, dass für einige zusammengefasste beziehungsweise für jeden Bearbeitungsschritt eine Anzahl an Profilstabbearbeitungs-Vorrichtungen vorgesehen ist. So können beispielsweise mehrere, gleiche Bearbeitungsschritte durchführende Profilstabbearbeitungs-Vorrichtungen eine oder mehrere Fräsungen in die Profilstäbe einbringen, dann im Anschluss weitere Profilstabbearbeitungs-Vorrichtungen Armierungen mit den Profilstäben verschrauben und wieder weitere verschweißen Profilstäbe miteinander, um einen Rahmen zu bilden.

Weitere Vorteile und Merkmale der Erfindung ergeben sich aus den Ansprüchen und der nachfolgenden Beschreibung von Ausführungsbeispielen der Erfindung, die anhand der Zeichnungen dargestellt sind. Teilweise sind Merkmale der Ausführungsbeispiele nur in Bezug auf eine Abbildung eines Ausführungsbeispiels beschrieben, können jedoch im Rahmen der Erfindung mit den anderen

Ausführungsbeispielen kombiniert werden. In den schematischen Zeichnungen zeigen:
- Fig.1: eine Übersicht einer erfindungsgemäßen Profilstabbearbeitungs- Anlage mit drei parallelen, die gleichen Bearbeitungsschritte durchführenden Profilstabbearbeitungs-Vorrichtungen sowie ei- ner als Sägezentrum ausgebildeten Profilstabbearbeitungs- Vorrichtung,
- Fig.2: ein Detailausschnitt der Übersicht in Fig.1 einer der parallelen Profilstabbearbeitungs-Vorrichtungen,
- Fig.3: eine Anordnung von drei aufeinanderfolgenden Profilstabbearbei- tungs-Vorrichtungen, in der bereits bearbeitete Profilstäbe aus- transportiert werden,
- Fig.4: eine Anordnung von drei aufeinanderfolgenden Profilstabbearbei- tungs-Vorrichtungen, in der bereits bearbeitete Profilstäbe nicht austransportiert werden und in der eine der drei Profilstabbear- beitungs-Vorrichtungen defekt ist, und
- Fig.5: eine Anordnung von zwei aufeinanderfolgenden Profilstabbear- beitungs-Vorrichtungen, in der bereits bearbeitete Profilstäbe austransportiert werden.

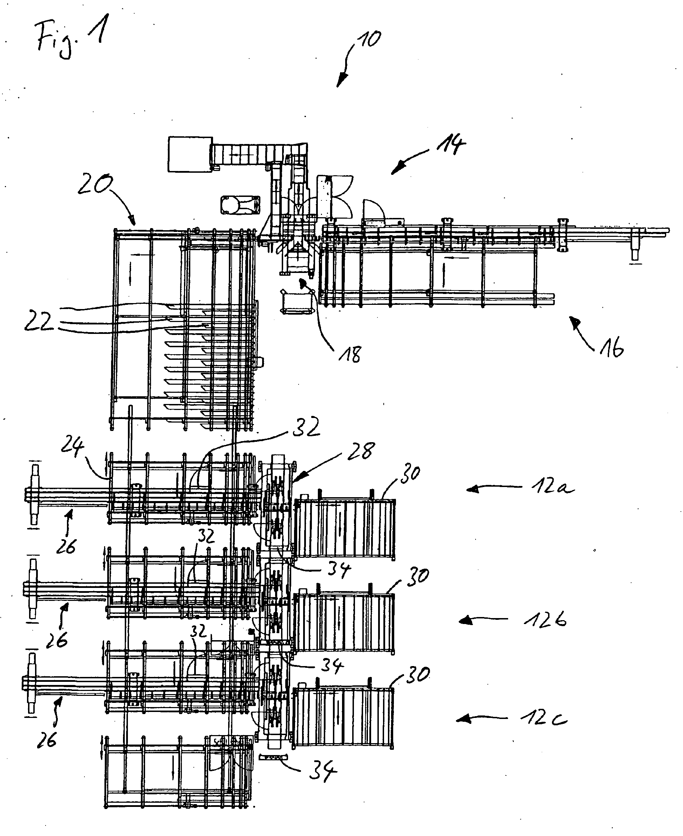

Die in Fig.1 dargestellte Übersicht einer erfindungsgemäßen Profilstabbearbeitungs-Anlage 10 weist drei im Wesentlichen identische Profilstabbearbeitungs-Vorrichtungen 12a, 12b, 12c sowie eine Profilstabbearbeitungs-Vorrichtung 14 auf, die als Sägezentrum ausgebildet ist. Das Sägezentrum 14 weist ein Profilstangenzuführung 16 auf, in dem nicht dargestellte Profilstangen mit einer Ursprungslänge von beispielsweise sechs Metern für einen Sägevorgang in einem Arbeitsbereich 18 des Sägezentrums 14 bereitgestellt werden. Für den Sägevorgang weist das Sägezentrum 14 beispielsweise eine nicht dargestellte Kreissägeblattanordnung auf, mit der auch Gehrungsschnitte an den Profilen angebracht werden können. Anschließend an den Arbeitsbereich 18 folgt eine erste Materialtransportbahn 20, auf der die zu Profilstäben 22 gesägten Profilstangen nach dem Sägen gelagert werden. Die Materialtransportbahn 20 führt die Profilstäbe 22 den Profilstabbearbeitungs-Vorrichtungen 12a, 12b, 12c zu.

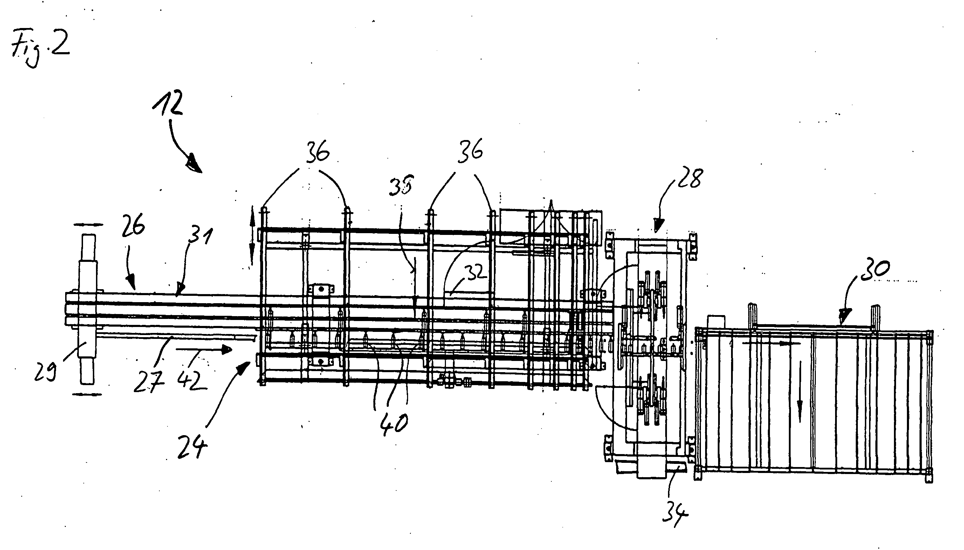

Fig.1 und das in Fig.2 dargestellte Detail der Übersicht aus Fig.1 zeigen eine der Profilstabbearbeitungs-Vorrichtungen 12a, 12b und 12c, die der Einfachheit halber mit 12 bezeichnet ist. Diese weist eine Materialtransportbahn 24, die auch als Transporttisch bezeichnet wird, einen Arbeitsbereich 28 mit einer Aufnahmeeinrichtung 26 und einem Austransporttisch 30 auf. Sowohl der Materialtransportbahn 24 als auch dem Arbeitsbereich 28 ist eine Steuereinheit 32, 34 mit eigenen Steuermitteln zugeordnet, mittels der die Materialtransportbahn 24 beziehungsweise der Arbeitsbereich 28 jeweils unabhängig voneinander steuerbar sind. Jede Profilstabbearbeitungs-Vorrichtung 12 hat also jeweils eine Materialtransportbahn 24 mit zugeordneter Steuereinheit 32 als auch eine eigene Steuereinheit 34. Jede Profilstabbearbeitungs-Vorrichtung 12 kann also alleinstehend betrieben werden und jede Materialtransportbahn 24 kann alleine, ohne den Rest der jeweils zugehörigen Profilstabbearbeitungs-Vorrichtung 12a, 12b, 12c betrieben werden.

Die Materialtransportbahn 24 weist mehrere, parallel zueinander ausgerichtete Förderbänder 36 auf, wobei eine Transportrichtung 38 der Materialtransportbahn 24 parallel zu den Förderbändern 36 verläuft. Die Aufnahmeeinrichtung 26 weist mehrere Rollen 40 auf, die in den Zwischenräumen zwischen den Förderbändern 36 versenkbar angeordnet sind. Weiter ist ein Greifer 27 vorgesehen, mittels dem auf den Rollen 40 liegende Profilstäbe am Ende gegriffen und dann in der Richtung des Pfeils 42 in den Arbeitsbereich 28 geschoben werden können. Hierzu ist der Greifer 27 an einem Transportschlitten 29 befestigt, der wiederum entlang einer Führung 31 verfahren werden kann. Während der Bearbeitung kann der Greifer die Profilstäbe festhalten und zieht diese dann auch wieder entgegen dem Pfeil 42 aus dem Arbeitsbereich 28 heraus. Die Transportrichtung 42 der Aufnahmeeinrichtung 26 verläuft senkrecht zur Transportrichtung 38 der Materialtransportbahn 24.

Zur Bearbeitung eines nicht dargestellten Profilstabes wird dieser mittels der Materialtransportbahn 24 bis an die Aufnahmeeinrichtung 26 geführt. Liegt der zu bearbeitende Profilstab über der Aufnahmeeinrichtung 26, werden die Rollen 40 aus ihrer Position unterhalb der Förderbänder 36 in eine Position oberhalb der Förderbänder 36 überführt, wobei die Rollen 40 bei der Aufwärtsbewegung das zu bearbeitende Profil von den Förderbändern 36 abheben. Der Greifer 27 greift das Profil und schiebt in Richtung des Pfeils 42, so dass der zu bearbeitende Profilstab dem Arbeitsbereich 28 zugeführt wird, in dem alle Bearbeitungsschritte vorgenommen werden. Im Anschluss an die Bearbeitungsschritte wird der bearbeitete Profilstab auf den Austransporttisch 30 ausgegeben und ein neuer Bearbeitungsvorgang kann beginnen.

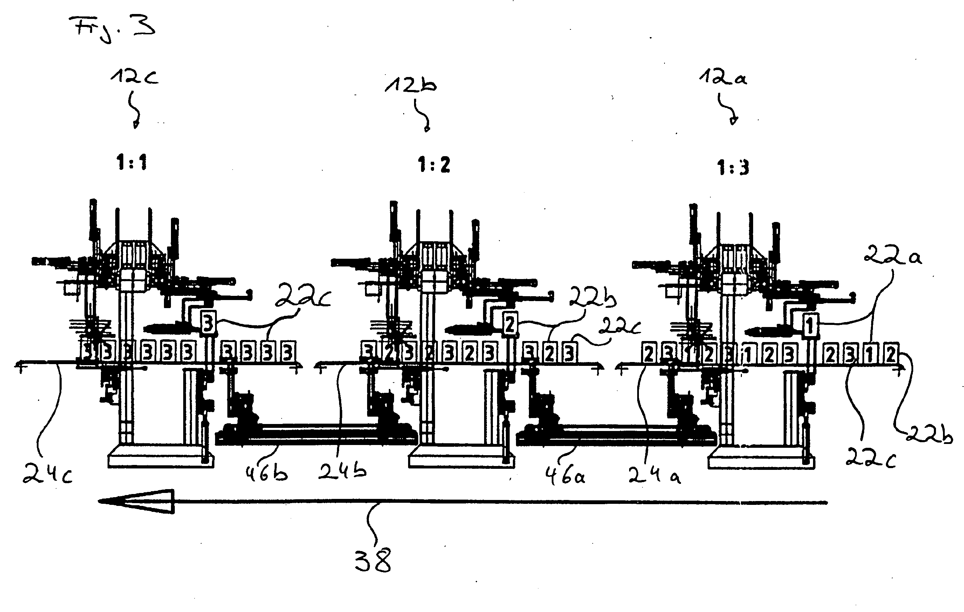

Wird die Profilbearbeitungs-Vorrichtung 12 als alleinstehende Maschine betrieben, so dient die Materialtransportbahn 24, die auch als Transporttisch bezeichnet wird, somit lediglich zum Zuführen von Profilstäben zu der Aufnahmeeinrichtung 26. Werden mehrere Profilstabbearbeitungs-Vorrichtungen 12a, 12b, 12c miteinander gekoppelt, wie dies beispielsweise in der Fig.3 dargestellt ist, so werden mittels der Materialtransportbahn 24 auch Profilstäbe an der jeweiligen Aufnahmeeinrichtung 26 vorbei und zur nächsten Profilstabbearbeitungs-Vorrichtung weitertransportiert. Um eine Profilbearbeitungs-Vorrichtung 12 für die Kopplung mit weiteren Profilbearbeitungs-Vorrichtungen 12 vorzubereiten, muß lediglich die Materialtransportbahn 24 ein Stück weit entlang dem Pfeil 38 verschoben werden, so dass die Profilstäbe an der Aufnahmeeinrichtung 26 weit genug in Richtung auf die nächste Profilstabbearbeitungs-Vorrichtung 12 transportiert werden können, so dass der Weitertransport problemlos möglich ist. In der Darstellung der Fig.2 ist allerdings bereits die entlang dem Pfeil 38 verschobene Stellung der Materialtransportbahn 24 dargestellt, die für die Kopplung mit weiteren Vorrichtungen geeignet ist. Weiterhin muß bei der Kopplung mehrerer Profilstabbearbeitungs-Vorrichtungen lediglich die Steuereinheit 34 in Bezug auf die Taktung der Vorrichtung umgestellt werden, wie dies nachfolgend noch detailliert erläutert wird.

Eine Anordnung von drei aufeinanderfolgenden Profilstabbearbeitungs-Vorrichtungen 12 ist in Fig.3 dargestellt. Diese Anordnung von drei Profilstabbearbeitungs-Vorrichtungen 12 ist deshalb vorteilhaft, da das Sägezentrum 14 in Fig.1 etwa dreimal so schnell Profilstäbe 22 zusägt, wie eine der Profilstabbearbeitungs-Vorrichtungen 12a, 12b, 12c die Profilstäbe 22 bearbeiten kann. Dies liegt im wesentlichen daran, dass die Profilstabbearbeitungs-Vorrichtungen 12 präzisere und eine größere Anzahl von Bearbeitungsschritten durchführen, beispielsweise Fräsungen, Bohrungen, Verschraubungen oder dergleichen in die Profilstäbe 22 einbringen.

Die in Fig.3 dargestellte Transportrichtung 38 weist von einer Profilstabzuführung weg, wobei die Profilstäbe 22a, 22b, 22c von dem Sägezentrum kommend zugeführt werden. Die Profilstäbe 22a, 22b, 22c werden auf den Materialtransportbahnen 24a, 24b, 24c transportiert. Von den Profilstäben 22a, 22b, 22c werden in der Profilstabbearbeitungs-Vorrichtung 12a nur die Profilstäbe 22a bearbeitet, die in der Darstellung der Fig. 3 die Ziffer 1 tragen. Die anderen Profilstäbe 22b, 22c werden mittels der Materialtransportbahn 24a an der Profilstabbearbeitungs-Vorrichtung 12a vorbeigeführt. Mit einem Übergabewagen 46a werden diese Profilstäbe 22b, 22c von der Materialtransportbahn 24a abgehoben und auf der nachfolgenden Materialtransportbahn 24b abgelegt. Von den Profilstäben 22b, 22c werden in der Profilstabbearbeitungs-Vorrichtung 12b nur die Profilstäbe 22b bearbeitet, die in der Darstellung der Fig. 3 die Ziffer 2 tragen. Die anderen Profilstäbe 22c werden mittels der Materialtransportbahn 24b an der Profilstabbearbeitungs-Vorrichtung 12b vorbeigeführt. Mit einem Übergabewagen 46b werden diese Profilstäbe 22c, die in der Darstellung der Fig. 3 die Ziffer 3 tragen, von der Materialtransportbahn 24b abgehoben und auf der nachfolgenden Materialtransportbahn 24c abgelegt und dann in der Profilstabbearbeitungs-Vorrichtung 12c bearbeitet. Die bearbeiteten, jedoch nicht dargestellten Profilstäbe werden von den Profilstabbearbeitungs-Vorrichtungen 12 auf den ebenfalls in Fig.3 nicht dargestellten Austransporttisch ausgegeben, also senkrecht zur Zeichenebene ausgegeben, vergleiche Fig. 1.

Demnach finden sich auf der Materialtransportbahn 24a der Profilstabbearbeitungs-Vorrichtung 12a Profilstäbe 22a, 22b, 22c, von denen jeweils ein Drittel von der ersten Profilstabbearbeitungs-Vorrichtung 12a, ein Drittel von der zweiten Profilstabbearbeitungs-Vorrichtung 12b und Drittel von der dritten Profilstabbearbeitungs-Vorrichtung 12c bearbeitet wird. Auf der Materialtransportbahn 24b der Profilstabbearbeitungs-Vorrichtung 12b finden sich Profilstäbe 22b, 22c, von denen jeweils die Hälfte von der zweiten Profilstabbearbeitungs-Vorrichtung 12b und die Hälfte von der Profilstabbearbeitungs-Vorrichtung 12c bearbeitet wird. Auf der Materialtransportbahn 24c der Profilstabbearbeitungs-Vorrichtung 12c befinden sich nur noch Profilstäbe 22c, die von der Profilstabbearbeitungs-Vorrichtung 12c bearbeitet werden.

Um eine ideale Bearbeitungstaktung zu erzielen, gibt die Profilstabbearbeitungs-Vorrichtung 12a von der Materialtransportbahn 24a mittels des Übergabewagens 46a erst zwei Profilstäbe 22b, 22c an die Materialtransportbahn 24b weiter und bearbeitet dann den dritten Profilstab 22a, den die Profilstabbearbeitungs-Vorrichtung 12a im Anschluss fertig bearbeitet auf den Austransporttisch ausgibt. Daher ist dies eine 1:3 Taktung. Die Profilstabbearbeitungs-Vorrichtung 12b gibt vom Materialtransportbahn 24b mittels des Übergabewagens 46b erst einen Profilstab 22c an die Materialtransportbahn 24c weiter und bearbeitet dann den zweiten Profilstab 22b, den die Profilstabbearbeitungs-Vorrichtung 12b im Anschluss fertig bearbeitet auf den Austransporttisch ausgibt. Daher ist dies eine 1:2 Taktung. Die Profilstabbearbeitungs-Vorrichtung 12c bearbeitet jeden ihr übergebenen Profilstab 22c, weswegen dies eine 1:1 Taktung ist.

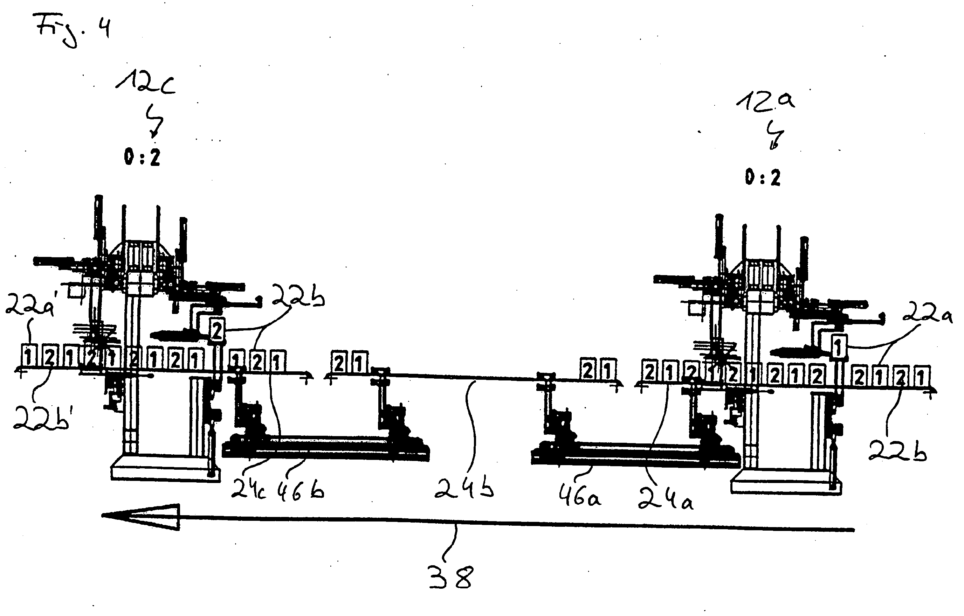

Die in Fig.4 gezeigte Anordnung von zwei aufeinanderfolgenden Profilstabbearbeitungs-Vorrichtungen 12a, 12c ist ähnlich der in Fig.3 dargestellten, in deren Zusammenhang einer der möglichen Normalbetriebmodi beschrieben ist. Jedoch werden bei der Anordnung der Fig.4 die bereits bearbeiteten Profilstäbe 22a, 22b nicht austransportiert und die in Fig. 3 dargestellte mittlere Profilstabbearbeitungs-Vorrichtung ist defekt und der Übersichtlichkeit halber in Fig.4 nicht dargestellt. In Bezug auf Fig.4 wird ein Notbetriebmodus beschrieben.

Der Profilstabbearbeitungs-Vorrichtung 12a werden mittels der Materialtransportbahn 24a Profilstäbe 22a, 22b von einem nicht dargestellten Sägezentrum zugeführt. Von den Profilstäben 22a, 22b werden in der Profilstabbearbeitungs-Vorrichtung 12a nur die Profilstäbe 22a bearbeitet. Die anderen Profilstäbe 22b werden mittels der Materialtransportbahn 24a an der Profilstabbearbeitungs-Vorrichtung 12a vorbeigeführt. Mit dem Übergabewagen 46a werden diese Profilstäbe 22b, aber auch die von der Profilstabbearbeitungs-Vorrichtung 12a bearbeiteten Profilstäbe 22a, von der Materialtransportbahn 24a abgehoben und auf der nachfolgenden Materialtransportbahn 24b abgelegt. Mittels der Materialtransportbahn 24b wird jedoch lediglich der Weitertransport der bereits bearbeiteten Profilstäbe 22a und der noch unbearbeiteten Profilstäbe 22b zum nächsten Übergabewagen 46b vorgenommen. Mit dem Übergabewagen 46b werden die Profilstäbe 22a, 22b von der Materialtransportbahn 24b abgehoben und auf der nachfolgenden Materialtransportbahn 24c abgelegt. Die Materialtransportbahn 24c führt der Profilstabbearbeitungs-Vorrichtung 12c die Profilstäbe 22b zur Bearbeitung zu. Demnach finden sich im Unterschied zur Anordnung gemäß Fig.3 in der Anordnung gemäß Fig.4 auf der Materialtransportbahn 24a der Profilstabbearbeitungs-Vorrichtung 12a Profilstäbe 22a, 22b, von denen jeweils die Hälfte von der ersten Profilstabbearbeitungs-Vorrichtung 12a und eine Hälfte von der zweiten Profilstabbearbeitungs-Vorrichtung 12c bearbeitet wird. Auf der Materialtransportbahn 24b finden sich alle Profilstäbe 22a, 22b, die lediglich zur Profilstabbearbeitungs-Vorrichtung 12c weitertransportiert werden. Auf der Materialtransportbahn 24c der Profilstabbearbeitungs-Vorrichtung 12c befinden sich die Profilstäbe 22a, 22b, wobei von der Profilstabbearbeitungs-Vorrichtung 12c lediglich die Profilstäbe 22b bearbeitet werden.

Um mit den hier vorliegenden Randbedingungen, nämlich keine Austransporttische sowie eine defekte und/oder fehlende Profilstabbearbeitungs-Vorrichtung, eine möglichst optimale Bearbeitungstaktung zu erzielen, gibt die Profilstabbearbeitungs-Vorrichtung 12a von der Materialtransportbahn 24a mittels des Übergabewagens 46a erst einen Profilstab 22b an die Materialtransportbahn 24b weiter und bearbeitet dann den zweiten Profilstab 22a, den die Profilstabbearbeitungs-Vorrichtung 12a fertig bearbeitet ausgibt, allerdings nicht auf den Austransporttisch sondern in Richtung der Materialtransportbahn 24b. Daher ist dies eine 0:2 Taktung. Die Profilstabbearbeitungs-Vorrichtung 12c bearbeitet lediglich die ihr unbearbeitet zugeführten Profilstäbe 22b und führt die bereits bearbeiteten Profilstäbe 22a an sich vorbei, weswegen auch hier eine 0:2 Taktung vorliegt. Da keine der Profilstabbearbeitungs-Vorrichtung 12a, 12c über einen Austransporttisch verfügt, werden die bearbeiteten Profilstäbe 22a', 22b' am Ende der Materialtransportbahn 24c ausgegeben und müssen von dort abtransportiert werden.

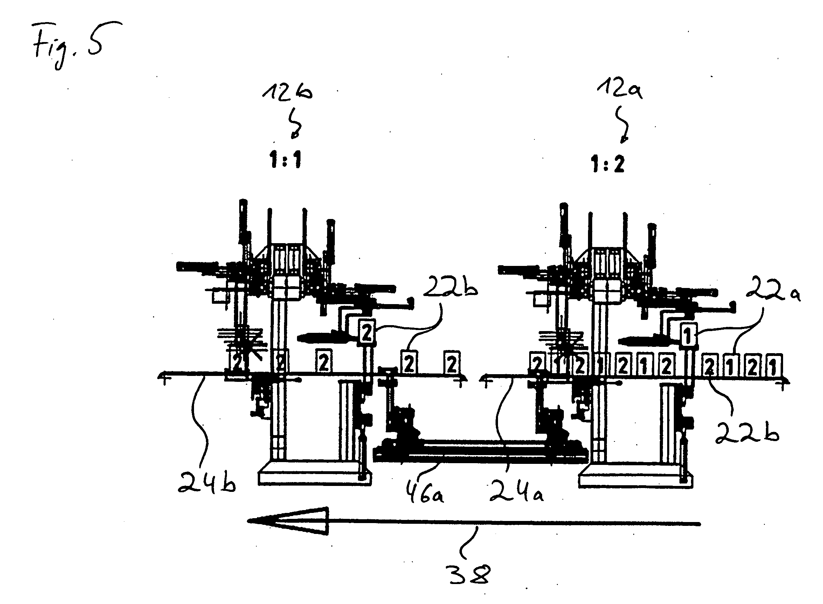

Im Unterschied zu den in Fig.3 und Fig.4 dargestellten und in deren Bezug beschriebenen Anordnungen sind in der Anordnung gemäß Fig.5 standardmäßig lediglich zwei Profilstabbearbeitungs-Vorrichtung 12a, 12b vorgesehen. Die Profilstabbearbeitungs-Vorrichtung 12a, 12b der Fig.5 weisen, wie schon die Profilstabbearbeitungs-Vorrichtung 12 der Fig.3, nicht dargestellte Austransporttische auf. Daraus ergibt sich für die Profilstabbearbeitungs-Vorrichtung 12a die Taktung 1:2, nämlich einen bearbeiteten Profilstab 22a auf den Austransporttisch ausgeben, wobei jeder zweite Profilstab 22a bearbeitet wird. Der andere Profilstab 22b wird mittels der Materialtransportbahn 24a lediglich an der Profilstabbearbeitungs-Vorrichtung 12a vorbeitransportiert und mittels des Übergabewagens 46a an die Materialtransportbahn 24b übergeben. Die Materialtransportbahn 24b führt die bis dahin noch unbearbeiteten Profilstäbe 22b der Profilstabbearbeitungs-Vorrichtung 12b zu. Die Taktung 1:1 der Profilstabbearbeitungs-Vorrichtung 12b ergibt sich aus den fertigbearbeiteten und auf den Austransporttisch ausgegebenen Profilstäben und daraus, dass jeder Profilstab 22b bearbeitet wird.

Weitere Taktungen, Profilstabbearbeitungs-Vorrichtungen und deren Anzahl sowie Bearbeitungs- beziehungsweise Weitertransportreihenfolgen sind jedoch ebenfalls denkbar und erschließen sich aus der vorstehenden Beschreibung der Figuren. Insgesamt ist erkennbar, dass an den einzelnen Profilstabbearbeitungs-Vorrichtungen 12a, 12b, 12c lediglich ein Verhältnis von zu bearbeitenden und durchgeschleusten Teilen eingestellt werden muss und weiter eingestellt werden muss, welche Teile auf den Austransporttisch ausgegeben oder weiter transportiert werden, um eine Vielzahl unterschiedlicher Betriebsmodi einzustellen. Durch einfache Einstellarbeiten können dadurch mehrere Profilstabbearbeitungs-Vorrichtungen ohne übergeordneten Mitrechner in sehr einfacher Weise zu einer Gesamtanlage verbunden werden.

## Patentansprüche

1. Profilstabbearbeitungs-Vorrichtung, insbesondere für den Fensterbau, mit einer Materialtransportbahn (24) und einer Aufnahmeeinrichtung (26) zum Aufnehmen wenigstens eines Profilstabs (22) von der Materialtransportbahn (24) zur Bearbeitung in der Profilstabbearbeitungs-Vorrichtung (12), **dadurch gekennzeichnet, dass** die Profilstabbearbeitungs-Vorrichtung (12) eine Steuereinheit (32, 34) mit Steuermitteln aufweist, um einen unbearbeiteten Profilstab (22) wahlweise zu der Aufnahmeeinrichtung (26) oder an dieser vorbei zu transportieren, wobei mittels der Steuermittel (32) unbearbeitete Profilstäbe (22) in einem einstellbaren Verhältnis entweder mittels der Aufnahmeeinrichtung (26) der jeweiligen Profilbearbeitungsvorrichtung (12) aufgenommen oder an dieser vorbei transportiert werden und wobei die Profilstabbearbeitungs-Vorrichtung (12) ausgebildet ist, ohne Vorsehen einer übergeordneten Steuereinheit modular mit weiteren, gleichenden und mit einer Steuereinheit (32, 34) mit Steuermitteln versehenen Profilstabbearbeitungs-Vorrichtungen (12) zur zur Bildung einer Anlage bestehend aus mehreren Profilstabbearbeitungs-Vorrichtungen (12) gekoppelt zu werden.

2. Profilstabbearbeitungs-Vorrichtung nach Anspruch 1, **dadurch gekennzeichnet, dass** die Materialtransportbahn (24) an der Aufnahmeeinrichtung (26) vorbei geführt ist und die Aufnahmeeinrichtung (26) für das Abheben eines Profilstabs (22) von der durchgehenden Materialtransportbahn (24) ausgebildet ist.

3. Profilstabbearbeitungs-Vorrichtung nach Anspruch 2, **dadurch gekennzeichnet, dass** die Aufnahmeeinrichtung (26) rechenartig von unten zwischen parallelen Förderbändern (36) der Materialtransportbahn (24) hindurchtreten kann.

4. Profilstabbearbeitungs-Vorrichtung nach einem der vorstehenden Ansprüche, **dadurch gekennzeichnet, dass** die Steuermittel der Steuereinheit (32, 34) der Materialtransportbahn (24) zugeordnet sind und die Steuermittel der Steuereinheit (32, 34) und die Materialtransportbahn (24) und gegebenenfalls weitere Transportvorrichtungen unabhängig von den übrigen Komponenten der Profilbearbeitungsvorrichtung (12) betreibbar sind.

5. Profilstabbearbeitungs-Vorrichtung nach Anspruch 4, **dadurch gekennzeichnet, dass** die Steuermittel der Steuereinheit (32, 34) und die Materialtransportbahn (24) und gegebenenfalls weitere Transportvorrichtungen der Profilbearbeitungsvorrichtung (12) eine eigene Stromversorgung und eine eigene programmierbare Steuerung aufweisen, insbesondere eine speicherprogrammierbare Steuerung (SPS).

6. Profilstabbearbeitungs-Vorrichtung nach einem der vorstehenden Ansprüche, **dadurch gekennzeichnet, dass** die Profilbearbeitungsvorrichtung (12) eine programmierbare Steuereinheit (32, 34) aufweist, insbesondere eine speicherprogrammierbare Steuerung (SPS).

7. Profilstabbearbeitungs-Anlage, insbesondere für den Fensterbau, **gekennzeichnet durch** wenigstens zwei sich gleichende und miteinander gekoppelte Profilbearbeitungsvorrichtungen (12a, 12b, 12c) nach Anspruch 1 zum Durchführen im wesentlichen gleicher Bearbeitungsvorgänge, wobei die Profilbearbeitungsvorrichtungen (12a, 12b, 12c) jeweils eine Materialtransportbahn (24a, 24b, 24c) aufweisen, wobei die Materialtransportbahnen (24a, 24b, 24c) der Profilbearbeitungsvorrichtungen (12a, 12b, 12c) hintereinander angeordnet sind, wobei jede Profilstabbearbeitungs-Vorrichtung (12a, 12b, 12c) eine Aufnahmeeinrichtung (26) zum Aufnehmen wenigstens eines Profilstabs (22a, 22b, 22c) von der Materialtransportbahn (24a, 24b, 24c) zur Bearbeitung in der Profilbearbeitungsvorrichtung (12a, 12b, 12c) aufweist, und wobei jede Profilstabbearbeitungs-Vorrichtung (12a, 12b, 12c) eine Steuereinheit mit Steuermitteln (32) aufweist, um einen unbearbeiteten Profilstab (22a,22b, 22c) wahlweise mittels der Aufnahmeeinrichtung (26) aufzunehmen oder an dieser vorbei zu transportieren.

8. Profilstabbearbeitungs-Anlage nach Anspruch 7, **dadurch gekennzeichnet, dass** die Materialtransportbahnen (24a, 24b, 24c) hintereinander angeordneter Profilbearbeitungsvorrichtungen (12a, 12b, 12c) mittels eines Übergabewagens (46a, 46b) gekoppelt sind, wobei jede Materialtransportbahn (24a, 24b, 24c) wenigstens zwei parallel laufende Förderbänder (36) aufweist und der Übergabewagen (46a, 46b) wenigstens zwei Hubzinken zur Aufnahme eines Profilstabs (22a, 22b, 22c) aufweist, die zwischen den Förderbändern (36) hindurch anhebbar sind.

9. Verfahren zur Profilstabbearbeitung mittels wenigstens zwei sich gleichenden, miteinander gekoppelten, eine Profilstabbearbeitungsanlage gemäß Anspruch 7 oder 8 bildenden Profilstabbearbeitungs-Vorrichtungen zum Durchführen im wesentlichen gleicher Bearbeitungsvorgänge, wobei die Profilstabbearbeitungs-Vorrichtungen (12a, 12b, 12c) jeweils eine Steuereinheit mit Steuermitteln sowie eine Materialtransportbahn (24a, 24b, 24c) aufweisen und wobei die Materialtransportbahnen (24a, 24b, 24c) der Profilstabbearbeitungsvorrichtungen (12a, 2b, 12c) hintereinander angeordnet sind, **dadurch gekennzeichnet, dass** die Steuermittel der jeweiligen Profilstabbearbeitungs-Vorrichtung entscheiden, ob ein unbearbeiteter Profilstab (22a, 22b, 22c) wahlweises in der Profilstabbearbeitungs-Vorrichtung (12a, 12b, 12c) bearbeitet wird oder ob ein unbearbeiteter Profilstab (22a, 22b, 22c) an der Profilstabbearbeitungs-Vorrichtung (12a, 12b, 12c) vorbei weitertransportiert wird.

10. Verfahren nach Anspruch 9, **dadurch gekennzeichnet, dass** eine erste vordefinierte Anzahl an unbearbeiteten Profilstäben (22a, 22b, 22c) mittels der Aufnahmeeinrichtung (26) der ersten Profilstabbearbeitungs-Vorrichtung (12a, 12b, 12c) aufgenommen wird und eine zweite vordefinierte Anzahl an unbearbeiteten Profilstäben (22a, 22b, 22c) an der Profilstabbearbeitungs-Vorrichtung (12a, 12b, 12c) vorbei transportiert wird.

11. Verfahren nach Anspruch 10, **dadurch gekennzeichnet, dass** ein Verhältnis der ersten vordefinierten Anzahl und der zweiten vordefinierten Anzahl an jeder Profilbearbeitungsvorrichtung (12a, 12b, 12c) einstellbar ist.

12. Verfahren nach einem der Ansprüche 9 bis 11, **dadurch gekennzeichnet, dass** in einer jeweiligen Profilbearbeitungsvorrichtung (12a, 12b, 12c) bearbeitete Profilstäbe (22a, 22b, 22c) zur eventuellen Weiterverarbeitung, insbesondere auf einen Austransporttisch, abtransportiert werden.

13. Verfahren nach Anspruch 12, **dadurch gekennzeichnet, dass** ein Verhältnis zwischen der Anzahl der an einer jeweiligen Profilbearbeitungsvorrichtung (12a, 12b, 12c) ankommenden Profilstäbe (22a, 22b, 22c) und der Anzahl der zur eventuellen Weiterverarbeitung, insbesondere auf einen Austransporttisch, abtransportierten Profilstäbe eingestellt wird.

## Claims

1. Profile member machining device, in particular for window construction, having a material conveyor track (24) and a pickup unit (26) for picking up at least one profile member (22) from the material conveyor track (24) for machining inside the profile member machining device (12), **characterized in that** profile member machining device (12) has a control unit (32, 34) with control means for conveying an unmachined profile member (22) optionally to the pickup unit (26) or past the latter, where by means of the control means (32) unmachined profile members (22) are either picked up in a settable ratio by the pickup unit (26) of the respective profile member machining device (12) or conveyed past the latter and where the profile member machining device (12) is designed to be coupled, without provision of a higher-level control unit, in modular form to further similar profile member machining devices (12) provided with control means having a control unit (32, 34) in order to form a facility comprising several profile member machining devices (12).

2. Profile member machining device according to Claim 1, **characterized in that** the material conveyor track (24) is routed past the pickup unit (26) and the pickup unit (26) is designed for lifting a profile member (22) from the continuous material conveyor track (24).

3. Profile member machining device according to Claim 2, **characterized in that** the pickup unit (26) can pass like a rake from underneath between parallel conveyor belts (36) of the material conveyor track (24).

4. Profile member machining device according to one of the preceding claims, **characterized in that** the control means of the control unit (32, 34) are assigned to the material conveyor track (24), and the control means of the control unit (32, 34) and the material conveyor track (24) and if applicable further conveying devices can be operated independently of the other components of the profile member machining device 12.

5. Profile member machining device according to Claim 4, **characterized in that** the control means of the control unit (32, 34) and the material conveyor track (24) and if applicable further conveying devices of the profile member machining device (12) have their own current supply and their own programmable control, in particular a programmable logic controller (PLC).

6. Profile member machining device according to one of the preceding claims, **characterized in that** the profile member machining device (12) has a programmable control unit (32, 34), in particular a programmable logic controller (PLC).

7. Profile member machining facility, in particular for window construction, **characterized by** at least two similar profile member machining devices (12a, 12b, 12c) coupled to one another in accordance with Claim 1 for performing substantially identical machining operations, where the profile member machining devices (12a, 12b, 12c) each have a material conveyor track (24a, 24b, 24c), where the material conveyor tracks (24a, 24b, 24c) of the profile member machining devices (12a, 12b, 12c) are arranged one behind the other, where each profile member machining device (12a, 12b, 12c) has a pickup unit (26) for picking up at least one profile member (22a, 22b, 22c) from the material conveyor track (24a, 24b, 24c) for machining in the profile member machining device (12a, 12b, 12c), and where each profile member machining device (12a, 12b, 12c) has a control unit with control means (32) for optionally picking up an unmachined profile member (22a, 22b, 22c) using the pickup unit (26) or conveying it past the latter.

8. Profile member machining facility according to Claim 7, **characterized in that** the material conveyor tracks (24a, 24b, 24c) of profile member machining devices (12a, 12b, 12c) arranged one behind the other are connected by a transfer cart (46a, 46b), where each material conveyor track (24a, 24b, 24c) has at least two parallel conveyor belts (36) and the transfer cart (46a, 46b) has at least two lifting prongs for picking up a profile member (22a, 22b, 22c) that are liftable between the conveyor belts (36).

9. Method for profile member machining by at least two similar profile member machining devices coupled to one another and forming a profile member machining facility in accordance with Claim 7 or 8 for performing substantially identical machining operations, where the profile member machining devices (12a, 12b, 12c) each have a control unit with control means and a material conveyor track (24a, 24b, 24c), and where the material conveyor tracks (24a, 24b, 24c) of the profile member machining devices (12a, 12b, 12c) are arranged one behind the other, **characterized in that** the control means of the respective profile member machining device decide whether an unmachined profile member (22a, 22b, 22c) is optionally machined in the profile member machining device (12a, 12b, 12c) or further conveyed past the profile member machining device (12a, 12b, 12c).

10. Method according to Claim 9, **characterized in that** a first predefined number of unmachined profile members (22a, 22b, 22c) is picked up by the pickup unit (26) of the first profile member machining device (12a, 12b, 12c) and a second predefined number of unmachined profile members (22a, 22b, 22c) is conveyed past the profile member machining device (12a, 12b, 12c).

11. Method according to Claim 10, **characterized in that** a ratio of the first predefined number and of the second predefined number can be set at each profile member machining device (12a, 12b, 12c).

12. Method according to one of Claims 9 to 11, **characterized in that** profile members (22a, 22b, 22c) machined in a respective profile member machining device (12a, 12b, 12c) are conveyed for possible further processing, in particular on an outfeed table.

13. Method according to Claim 12, **characterized in that** a ratio is set between the number of profile members (22a, 22b, 22c) arriving at a respective profile member machining device (12a, 12b, 12c) and the number of profile members being conveyed for possible further processing, in particular on an outfeed table.

## Revendications

1. Dispositif de traitement de barres profilées, en particulier pour la construction de fenêtres, avec une voie de transport de matériel (24) et un dispositif de réception (26) destiné à réceptionner au moins une barre profilée (22) en provenance de la voie de transport de matériel (24) pour le traitement dans le dispositif de traitement de barres profilées (12), **caractérisé en ce que** le dispositif de traitement de barres profilées (12) présente une unité de commande (32, 34) avec des moyens de commande pour soit transporter une barre profilée non traitée vers le dispositif de réception (26), soit la faire passer à côté de celui-ci, sachant que les barres profilées non traitées (22) sont, à l'aide des moyens de commande (32) et selon un rapport réglable, soit réceptionnées par le dispositif de réception (26) du dispositif de traitement de barres profilées correspondant (12), soit conduites plus loin en passant à côté de celui-ci, et que le dispositif de traitement de barres profilées (12) est conçu pour être couplé, de manière modulaire et sans prévoir une unité de commande supérieure, à d'autres dispositifs de traitement de barres profilées (12) identiques pourvus d'une unité de commande (32, 34) et de moyens de commande, pour former une installation composée de plusieurs dispositifs de traitement de barres profilées (12).

2. Dispositif de traitement de barres profilées selon la revendication 1, **caractérisé en ce que** la voie de transport de matériel (24) est conduite plus loin en passant à côté du dispositif de réception (26) et que le dispositif de réception (26) est conçu pour soulever une barre profilée (22) de la voie de transport de matériel (24) continue.

3. Dispositif de traitement de barres profilées selon la revendication 2, **caractérisé en ce que** le dispositif de réception (26) peut pénétrer tel un râteau par le bas entre des lignes parallèles (36) de la voie de transport de matériel (24).

4. Dispositif de traitement de barres profilées selon l'une des revendications précédentes, **caractérisé en ce que** les moyens de commande de l'unité de commande (32, 34) sont assignés à la voie de transport de matériel (24) et que les moyens de commande de l'unité de commande (32, 34) et la voie de transport de matériel (24), et le cas échéant d'autres dispositifs de transport peuvent être utilisés indépendamment des autres composants du dispositif de traitement de barres profilées (12).

5. Dispositif de traitement de barres profilées selon la revendication 4, **caractérisé en ce que** les moyens de commande (32, 34) et la voie de transport de matériel (24), et le cas échéant d'autres dispositifs de transport du dispositif de traitement de barres profilées (12), présentent leur propre alimentation électrique et leur propre commande programmable, en particulier une commande à mémoire programmable.

6. Dispositif de traitement de barres profilées selon l'une des revendications précédentes, **caractérisé en ce que** le dispositif de traitement de barres profilées (12) présente une unité de commande programmable (32, 34), en particulier une commande à mémoire programmable.

7. Installation de traitement de barres profilées, en particulier pour la construction de fenêtres, **caractérisée par** au moins deux dispositifs de traitement de barres profilées (12a, 12b, 12c) selon la revendication 1 similaires et couplés entre eux pour réaliser des procédés de traitement essentiellement identiques, sachant que les dispositifs de traitement de barres profilées (12a, 12b, 12c) présentent respectivement une voie de transport de matériel (24a, 24b, 24c), que les voies de transport de matériel (24a, 24b, 24c) des dispositifs de traitement de barres profilées (12a, 12b, 12c) sont disposées les unes derrière les autres, que chaque dispositif de traitement de barres profilées (12a, 12b, 12c) présente un dispositif de réception (26) pour réceptionner au moins une barre profilée (22a, 22b, 22c) de la voie de transport de matériel (24a, 24b, 24c) pour le traitement dans le dispositif de traitement de barres profilées (12a, 12b, 12c), et que chaque dispositif de traitement de barres profilées (12a, 12b, 12c) présente une unité de commande avec des moyens de commande (32) pour soit réceptionner une barre profilée non traitée (22a, 22b, 22c) au moyen du dispositif de réception (26), soit la faire passer à côté de celui-ci.

8. Installation de traitement de barres profilées selon la revendication 7, **caractérisée en ce que** les voies de transport de matériel (24a, 24b, 24c) des dispositifs de traitement de barres profilées disposés les uns derrière les autres (12a, 12b, 12c) sont couplées au moyen d'un chariot de transfert (46a, 46b), sachant que chaque voie de transport de matériel (24a, 24b, 24c) présente au moins deux bandes de transport (36) s'étendant parallèlement, et que le chariot de transport (46a, 46b) présente au moins deux pointes de levage pour réceptionner une barre profilée (22a, 22b, 22c), lesquelles peuvent être levées entre et à travers les bandes de transport (36).

9. Procédé de traitement de barres profilées au moyen d'au moins deux dispositifs de traitement de barres profilées identiques, couplés entre eux et formant une installation de traitement de barres profilées selon la revendication 7 ou 8 pour réaliser des procédés de traitement essentiellement identiques, sachant que les dispositifs de traitement des barres profilées (12a, 12b, 12c) présentent respectivement une unité de commande avec des moyens de commande ainsi qu'une voie de transport de matériel (24a, 24b, 24c), et que les voies de transport de matériel (24a, 24b, 24c) des dispositifs de traitement de barres profilées (12a, 12b, 12c) sont disposées les unes derrière les autres, **caractérisé en ce que** les moyens de commande du dispositif de traitement de barres profilées correspondant décident si une barre profilée non traitée (22a, 22b, 22c) est au choix traitée dans le dispositif de traitement de barres profilées (12a, 12b, 12c) ou si une barre profilée non traitée (22a, 22b, 22c) est transportée plus loin en passant à côté du dispositif de traitement de barres profilées (12a, 12b, 12c).

10. Procédé selon la revendication 9, **caractérisé en ce qu'**un premier nombre prédéfini de barres profilées non traitées (22a, 22b, 22c) est réceptionné au moyen du dispositif de réception (26) du premier dispositif de traitement de barres profilées (12a, 12b, 12c) et qu'un second nombre prédéfini de barres profilées non traitées (22a, 22b, 22c) passe à côté du dispositif de traitement de barres profilées (12a, 12b, 12c).

11. Procédé selon la revendication 10, **caractérisé en ce que** le rapport entre le premier nombre prédéfini et le second nombre prédéfini est réglable sur chaque dispositif de traitement de barres profilées (12a, 12b, 12c).

12. Procédé selon l'une des revendications 9 à 11, **caractérisé en ce que** des barres profilées (22a, 22b, 22c) traitées dans un dispositif de traitement de barres profilées (12a, 12b, 12c) respectif sont évacuées pour un éventuel traitement ultérieur, en particulier sur une table de sortie.

13. Procédé selon la revendication 12, **caractérisé en ce qu'**est réglé un rapport entre le nombre de barres profilées (22a, 22b, 22c) arrivant à un dispositif de traitement de barres profilées (12a, 12b, 12c) respectif et le nombre de barres profilées évacuées pour un éventuel traitement ultérieur, en particulier sur une table de sortie.
